# EUROPEAN PATENT APPLICATION

(11) **EP 1 607 506 A1**
(43) Date of publication of application: **21.12.2005**
(21) Application number: 05253023.5
(22) Date of filing: 17.05.2005
(51) Int. Cl.: D06F 37/30, H02K 9/04

(54) **Drum-type washing machine with an outer rotor type motor**

(30) Priority: 16.06.2004 KR 2004044323
(71) Applicant: SAMSUNG ELECTRONICS CO., LTD., Suwon-si, Gyeonggi-do (KR)
(72) Inventor: Kim, Seon Goo 914-904, Byeokjeokgol Joogong Apt., Gyeonggi-Do (KR); Kang, Sung Wook, Seoul (KR); Georgiy, Severinets 812-303, Byeokjeokgol Shinhan, Suwon-Si Gyeonggi-Do (KR)
(74) Representative: Davies, Robert Ean

(57) **Abstract**

A drum-type washing machine including a housing (10), a water tub (20) installed in the housing to contain wash water, a rotatable tub (30) rotatably installed in the water tub to rotate upon receiving a rotating force via a rotatable shaft (43), a stator (41) fixedly mounted to the water tub (20) having an annular shape to allow the rotatable shaft (43) to penetrate therethrough, and a rotor (42) mounted to the rotatable shaft (43) to rotate along with the rotatable tub (30) by interaction with the stator. The rotor (42) has protrusions (42d) at an outer end thereof with protrusions having a predetermined height, and the protrusions being formed with communication holes (42e) communicating the inside and outside of the rotor with each other.

## Description

The present invention relates to a drum-type washing machine, and, more particularly, but not exclusively, to a drum-type washing machine having a driving motor adapted to rotate a rotating tub.

In general, drum-type washing machines wash laundry by repeatedly performing washing and rinsing operations. Such a drum-type washing machine is adapted to repeatedly raise and drop the laundry, so that the laundry is washed due to the dropping force.

The drum-type washing machine conventionally includes a housing defining the outer appearance of the washing machine, a cylindrical water tub installed in the housing to contain water, a rotating tub rotatably installed in the water tub, and a driving motor installed behind the water tub to generate a rotating force necessary to rotate the rotating tub. The rotating force generated from the driving motor is transmitted to the rotating tub via a rotating shaft. As the rotating tub rotates upon receiving the rotating force, the laundry, previously received in the rotating tub, can be washed.

The driving motor includes an annular stator fixed to a rear surface of the water tub, and an annular rotor disposed around the stator and fixed to the rotating shaft. As the rotor rotates by interaction of the stator and the rotor, the rotor rotates the rotating shaft thereby rotating the rotating tub.

In this case, in order to externally emit heat generated by the driving motor, the rotor of the driving motor is formed with a plurality of communication holes. The communication holes allow the inside and outside of the driving motor to communicate with each other, thereby allowing the driving motor to be cooled by the outside air introduced into the driving motor via the communication holes.

In the above-described conventional drum-type washing machine, generally, the driving motor is driven at a low speed in a wash cycle, and is driven at a high speed in a spin-dry cycle. During the low speed driving of the driving motor, namely, in the wash cycle, only a small amount of the outside air is introduced into the driving motor via the communication holes. This is because of a low rotation speed of the rotor, and results in poor cooling efficiency of the driving motor.

Accordingly, it is an aim of embodiments of the present invention to provide a drum-type washing machine having improved cooling efficiency of a driving motor thereof.

Additional aspects and/or advantages of the invention will be set forth in part in the description which follows and, in part, will be apparent from the description, or may be learned by practice of the invention.

According to a first aspect of the present invention, there is provided a drum-type washing machine including: a housing; a water tub installed in the housing to contain wash water; a rotating tub rotatably installed in the water tub to rotate upon receiving a rotating force via a rotating shaft, to transfer the rotating force to the tub; a stator mounted on the water tub; a rotor mounted on the rotating shaft; a plurality of protrusions protruding from the motor to increase a difference in air flow rates between an inside and an outside of the rotor; and a plurality of communication holes formed at the protrusions and for fluid communication of the inside and outside of the rotor.

The rotor may include a substantially circular hub portion rotating with the rotating shaft; and a magnet mounting portion extending from an outer edge of the hub portion to cover a radial outer side of the stator, including magnets on an inside therein, wherein the protrusions protrude from the hub portion.

The protrusions may extend radially and outwardly from a center of the hub portion such that lateral opposite surfaces of the protrusions push air from the center of the hub portion in a radially outward direction.

The plurality of the protrusions may be radially formed at the hub portion.

According to a second aspect of the present invention, there is provided a drum-type washing machine comprising: a rotor; a plurality of protrusions on an outside of the rotor; and a plurality of holes formed in the protrusions to pass air from an inside of the rotor to an outside of the rotor.

For a better understanding of the invention, and to show how embodiments of the same may be carried into effect, reference will now be made, by way of example, to the accompanying diagrammatic drawings in which:
FIG. 1 is a side sectional view illustrating a drum-type washing machine in accordance with an embodiment of the present invention;
FIG. 2 is an enlarged view of circle II shown in FIG. 1; and
FIG. 3 is an exploded perspective view illustrating the installation structure of a driving motor employed in the drum- type washing machine in accordance with an embodiment of the present invention.

Reference will now be made in detail to an embodiment of the present invention, an example of which is illustrated in the accompanying drawings, wherein like reference numerals refer to the like elements throughout. An embodiment is described below to explain the present invention by referring to the figures.

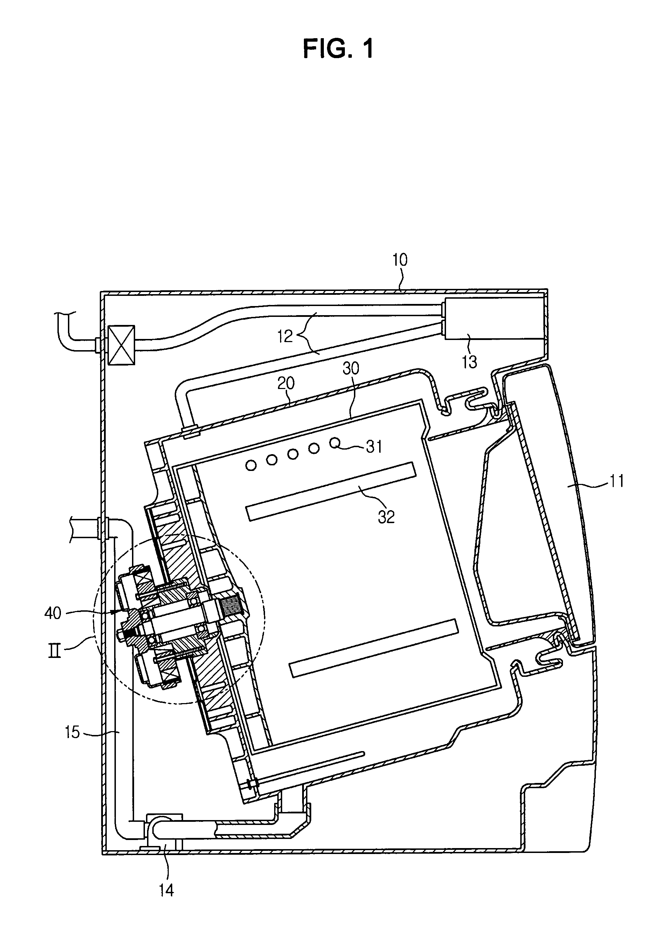

FIG. 1 is a side sectional view illustrating a drum-type washing machine in accordance with an embodiment of the present invention. As shown in FIG. 1, the drum-type washing machine includes a housing 10 defining the outer appearance of the washing machine, a water tub 20 suspended in the housing 10 and adapted to contain wash water, and a cylindrical rotating tub 30 rotatably installed in the water tub 20 and formed at a peripheral wall thereof with a plurality of through-holes 31. Reference numeral 32 denotes lifters adapted to raise laundry.

Openings are provided at respective front ends of the water tub 20 and the rotating tub 30 to allow the laundry to be put into or taken out of the rotating tub 30. A door 11 is hingably mounted to a front wall of the housing 10, to open and close the openings of the water tub 20 and the rotating tub 30.

Installed at the top of the housing 10 are a water supply pipe 12 to receive wash water from an external water supply source, a detergent container 13 to contain detergent, and mix the detergent with the wash water supplied via the water supply pipe 12. A drain pump 14 and a drain hose 15 are installed at the bottom of the housing 10, in order to externally drain the wash water after completion of a wash cycle.

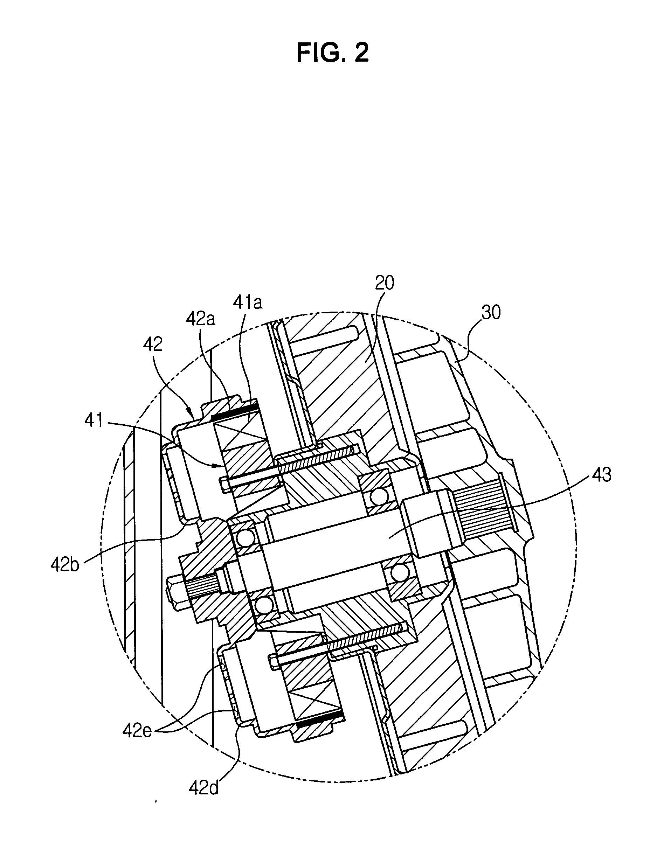

The drum-type washing machine further includes a driving motor 40 to generate a rotating force required to rotate the rotating tub 30, and a rotating shaft 43 (FIG. 2) which is connected at one end thereof to the driving motor 40, and at the other end thereof to the rotating tub 30, and to transmits the rotating force from the driving motor 40 to the rotating tub 30.

As shown in FIG. 2, the driving motor 40 includes a stator 41 and a rotor 42. The stator 41 is fixedly mounted to the water tub 20, and has an annular shape for allowing the rotating shaft 43 to penetrate therethrough and be installed therein. The stator 41 generates a magnetic field upon receiving a power supply voltage. The rotor 42 has magnets 42a annularly disposed around the stator 41, and interacts with the stator 41 to rotate the rotating shaft 43 centrally fitted therein.

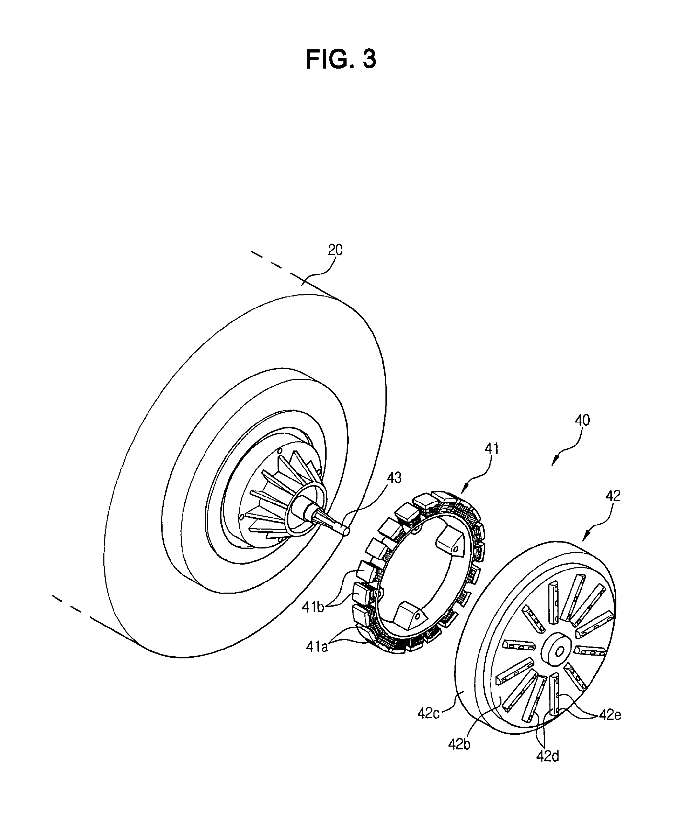

Referring to FIG. 3, the stator 41, taking the annular form, is provided at a circumferential surface thereof with a plurality of protruding teeth 41 b having respective coils 41 a wound thereon, such that it can generate a magnetic field as a power supply voltage is applied to the coils 41 a. The rotor 42 further has a circular hub portion 42b adapted to fixedly install the rotating shaft 43 in the center thereof, and a magnet mounting portion 42c. The magnet mounting portion 42c annularly extends from an outer edge of the circular hub portion 42b to cover the radial outer side of the stator 41, thereby allowing the magnets 42a to be annularly disposed at the radial outer side of the stator 41.

In the above-described drum-type washing machine, in order to achieve effective cooling of the driving motor 40, the hub portion 42b is provided with a plurality of elongated protrusions 42d having a predetermined height. The protrusions 42d respectively have communication holes 42e formed at the uppermost portions thereof and allow the inside and outside of the rotor 42 to communicate with each other.

In the driving motor 40, since the stator 41 is disposed inside the rotor 42, the volume of an air flow space defined in the rotor 42 is small, and thus the inside of the rotor 42 has a relatively high flow resistance. On the contrary, the outside of the rotor 42 is open and thus has a low flow resistance. As a result, the air outside of the hub portion 42b flows at a higher flow rate than the air inside of the rotor 42. However, when the air is in contact with an outer surface of the hub portion 42b, there is a significant frictional force between the air and the outer surface. This frictional force reduces the flow rate, so that the net difference between the flow rates inside and outside the rotor 42 is reduced. Specifically, the flow rate outside the rotor is only slightly greater than that of the air inside of the rotor 42.

Therefore, the protrusions 42d and the communication holes 42e formed therein are included to increase this pressure difference that would otherwise only be slight. Thus, flow rates of the air inside and outside of the communication holes 42e differ greatly from one another. This results in an increase in pressure difference between the air inside of the rotor 42, having a relatively low flow rate, and the air outside of the rotor 42, having a relatively high flow rate, according to Bernoulli's theorem. Thereby, the air inside of the rotor 42, having a relatively high pressure, can be easily discharged to the outside of the rotor 42, in a relatively low pressure state, via the communication holes 42e.

Furthermore, in the present embodiment, since a plurality of the elongated protrusions 42d are formed at the hub portion 42b such that they extend in a radial outward direction, lateral opposite surfaces of the respective protrusions 42d serve as a fan adapted to push the air, in contact with the outer surface of the rotor 42, in the radial outward direction. This increases the flow rate of the air in contact with the outer surface of the hub portion 42b, resulting in an increased flow rate difference between the inside and outside of the rotor 42.

As is apparent from the above description, a drum-type washing machine according to an embodiment of the present invention includes a driving motor, which is designed in such a fashion that a rotor thereof is provided with a plurality of protrusions adapted to increase a difference in air flow rates between the inside and outside of the rotor, such that the air inside of the rotor, having a relatively low flow rate, has a higher pressure than the air outside of the rotor, having a relatively high flow rate, according to Bernoulli's theorem. This allows the air inside of the rotor to be discharged to the outside of the driving motor via communication holes perforated at the protrusions by the large pressure difference, and consequently, guaranteeing effective cooling of the driving motor even when the driving motor is driven at a low speed.

Although an embodiment of the present invention has been shown and described, it would be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A drum-type washing machine comprising:
a housing (10);
a water tub (20) installed in the housing to contain wash water;
a tub (30) rotatably installed in the water tub to rotate upon receiving a rotating force;
a rotatable shaft (43) to transfer the rotating force to the tub;
a stator (41) mounted on the water tub (20);
a rotor (42) mounted on the rotatable shaft (43);
a plurality of protrusions (42d) protruding from the rotor (42) to increase a difference in flow rates of air between an inside and an outside of the rotor; and
a plurality of communication holes (42e) formed in the protrusions and for fluid communication of the air between the inside and outside of the rotor (42).

2. The washing machine according to claim 1, wherein the rotor (42) comprises:
a substantially circular hub portion (42b) rotatable with the rotating shaft; and
a magnet mounting portion (42c) extending from an outer edge of the hub portion (42b) to cover a radial outer side of the stator (41), comprising magnets on an inside therein,
wherein the protrusions (42d) protrude from the hub portion.

3. The washing machine according to claim 2, wherein the protrusions (42d) extend in a radially outward direction from a center of the hub portion (42b) such that lateral opposite surfaces of the protrusions push the air from the center of the hub portion in the radially outward direction.

4. The washing machine according to claim 3, wherein the plurality of the protrusions (42d) are radially formed at the hub portion.

5. The washing machine according to any preceding claim, wherein the communication holes (42e) are formed at an uppermost portion of the respective protrusions (42d).

6. The washing machine according to any of claims 2-5, wherein the communication holes (42e) are spaced outwardly from an outer surface of the hub portion (42b).

7. The washing machine according to any of claims 2-6, wherein in use the air inside the rotor is discharged outside the rotor via the communication holes (42e).

8. A drum-type washing machine comprising:
a rotor (42);
a plurality of protrusions (42d) on an outside of the rotor; and
a plurality of holes (42e) formed in the protrusions (42d) to pass air from an inside of the rotor to an outside of the rotor.
